(19) Europäisches Patentamt / European Patent Office / Office européen des brevets

(11) **EP 2 674 825 A1**

(12) **EUROPEAN PATENT APPLICATION**
published in accordance with Art. 153(4) EPC

(43) Date of publication:
**18.12.2013 Bulletin 2013/51**

(51) Int Cl.:
*G05B 19/4097* (2006.01)　　*B23C 3/28* (2006.01)
*B23Q 15/00* (2006.01)

(21) Application number: **11858300.4**

(22) Date of filing: **30.11.2011**

(86) International application number:
**PCT/JP2011/077594**

(87) International publication number:
**WO 2012/108093 (16.08.2012 Gazette 2012/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2011　JP 2011026061**

(71) Applicant: **Hitachi, Ltd.**
**Tokyo 100-8280 (JP)**

(72) Inventors:
 • **BAYASI, Qiqige**
 **Tokyo 100-8280 (JP)**

 • **ONOZUKA, Hideaki**
 **Tokyo 100-8280 (JP)**
 • **KONO, Ippei**
 **Tokyo 100-8280 (JP)**
 • **NAKANO, Takahiro**
 **Tokyo 100-8280 (JP)**
 • **TSUTSUMI, Daisuke**
 **Tokyo 100-8280 (JP)**

(74) Representative: **Strehl Schübel-Hopf & Partner**
**Maximilianstrasse 54**
**80538 München (DE)**

(54) **MACHINING PATH CREATION METHOD AND MACHINING METHOD**

(57)　The invention relates to a machining path creation method for creating machining paths used to remove a part of a material by cutting, and a machining method based on the machining paths, include a first machining path creation step of using design information to create a first machining path used to cut, from a first direction with respect to the material, a region of the material to be removed at a predetermined depth; and a second machining path creation step of using the design information to create a second machining path used to cut, from a second direction with respect to the material, the region of the material to be removed to a surface located at the predetermined depth at which the region is cut on the basis of the machining path created in the first machining path creation step.

FIG. 12B

**Description**

Background

The present invention relates to a machining path creation method for creating machining paths enabling a machining method for machining a material to be performed for cutting by a numerically controlled machine tool, and a machining method for performing cutting and machining.

To machine a material by using a numerically controlled machine tool, a numerical control command for controlling machining operations needs to be programmed in advance. Numerical control programming based on computers has been studied since the early days of development of numerically controlled machine tools, leading to development of an APT (automatic programming tool, hereinafter referred to as APT) system and an EXAPT (extended subset of APT, hereinafter referred to as EXAPT) system.

In the APT and EXAPT systems, a machining path can be automatically created from a part program that defines a geometry state describing the shape of a machining part and  a technical statement describing the state of a surface to be machined, machining position accuracy, a material, a machining method and the like. A person, however, inputs the part program using the APT language and the EXAPT language while seeing a diagram, so it takes a lot of time and efforts to input the part program. After an entity model can be handled in a computer, a machining path creation device based on this shape model creates a machining path on the basis of a shape model accumulated as an internal model of the computer, a machining shape and a machining method that are specified by an operator, and information such as tool information, without an instruction for a machining path with a shape defined using the part program, unlike the APT and the EXAPT.

Examples of a machining method for a conventional numerically controlled machining tool include contour cutting and cutting thrust. The contour cutting is a method for continuing digging while changing a vertical position of a surface to be machined. The cutting thrust is a method for digging a honeycomb hole with an end mill or a drill until a region in front of a finished surface. Patterns of a machining path to be created include a jig, a trochoid and the like. These machining methods are methods for removing all objects (to be cut) by cutting. A machining path to be used to perform the machining methods  is created for the purpose of cutting all objects specified to be cut.

In the contour cutting and the cutting thrust, it takes a long time to perform machining, and the machining is performed only with an edge part of a tool. Thus, there are disadvantages that the cutting efficiency is low and the lifetime of the tool is short. There are methods described in Patent Documents 1 and 2 as machining methods that overcome the disadvantages.

The machining method described in the Japanese Patent No. 3545070 (Patent Document 1) is a rough machining method for machining a material to cut an object using a product shape as a standard and sequentially forming step portions. The rough machining method includes two machining processes, a deep cutting rough machining process and an upward machining process. The deep cutting rough machining process is a machining process of sequentially cutting an object from an upper step to a lower step while a cutting amount (cutting depth) at one time is equal to the total length of a tool. The upward machining process is a machining process of subsequently cutting steps formed in the deep cutting rough machining process at smaller pitches from the lower step to the upper step and finishing a product shape. In this machining method, since the total length of cutting teeth of the tool or a wide range of the  cutting teeth is effectively used for the machining, the cutting efficiency is improved compared with the contour cutting, the tool is less worn, and the lifetime of the tool is improved.

The machining method described in the Japanese Patent No. 3870021 (Patent Document 2) is a machining path creation method for performing machining on the basis of a machining path created by offsetting a predetermined amount of an input machining shape. In the machining path creation method, at least one machining range among a concave portion or a range in which there is no leaving object after a tool is moved along a machining path and performs cutting by trochoid machining is treated as a trochoid machining path, and a machining path other than the range is treated as a side surface machining path. Specifically, the machining method described in Patent Document 2 is characterized by the fact that, to form a desired machining shape, a machining path that is formed by combining the trochoid machining path and the side surface machining path is formed within the machining shape. Thus, while the cutting efficiency is maintained, a machining path that causes a load applied to the tool to be low can be created.

Summary

The machining methods described in Patent Documents 1 and 2 are methods for cutting and removing a whole object to be cut. Machining paths that are used to perform the machining methods are created for the purpose of cutting a whole object specified to be cut. In the machining methods (described in Patent Documents 1 and 2) for a conventional numerically controlled machine tool, a machining path to be used to machine and cut a part of an object to be cut cannot be automatically created. When machining is performed for cutting, an operator needs to input a part program that defines a shape, causing a problem that the number of processes is large and time and efforts are needed.

When a conventional numerically controlled machine tool is used to cut a part of an object to be cut, a user needs to create a machining path used to cut the part of the object or use a system to create the machining path, causing the following problems.

(1) Since the user needs to determine a region that can be cut for each of surfaces to be machined, the machining largely depends on the person.
(2) A conventional machining path creation system does not include a technique for calculating a path for the cutting method, so a 3D CAD needs to be used to define an unmachined region to be cut, whereby time and efforts are needed.

To solve the problems of the conventional techniques, the invention is to automatically determine a shape that can be cut from a three-dimensional CAD model (hereinafter referred to as 3D CAD) of product design, automatically create a machining path used for a cutting method to shorten a time for machining of a product, reducing wearing of a tool.

Specifically, the invention is to automatically determine a region that can be cut from a 3D CAD model of a product design, and automatically create a machining path for the cutting method. In addition, for creation of a machining path for cutting, a chatter vibration caused by machining is suppressed by leaving a bridge between a portion to be cut and a remaining portion of an object to be cut, and a direction in which the object is cut and a time for the cutting are controlled.

The invention is to automatically determine a region that can be cut without cutting an object from a 3D CAD of product design, and automatically create a machining path for machining and cutting. Specifically, (1) information about the shape of the object to be cut is acquired from a CAD design screen for a part and material information, and the object is divided into blocks in consideration of a cutting depth of a tool and the diameter of the tool. (2) A machining path is created from at least two surfaces of the object to be cut, and the amount of a part to be cut is reduced by a method for cutting the part of the blocks. (3) Upon creation of the machining path, a chatter vibration is suppressed by leaving a bridge, and a direction in which the object is divided into the blocks is controlled.

To solve the aforementioned problems, according to the invention, a machining path creation method for creating machining paths to be used to remove a part of a material by cutting includes a first machining path creation step of using design information to create a first machining path used to cut, from a first direction with respect to the material, a region of the material to be removed; and a second machining path creation step of using the design information to create a second machining path used to cut, from a second direction with respect to the material, a part located under a surface of the region to which the machining from the first direction is applied, as the region of the material to be removed.

To solve the aforementioned problems, according to the invention, a machining path creation method for creating machining paths to be used to remove a part of a material by cutting includes a first machining path creation step of using design information to create a first machining path used to cut, from a first direction with respect to the material, a region of the material to be removed at a predetermined depth; and a second machining path creation step of using the design information to create a second machining path used to cut, from a second direction with respect to the material, the region of the material to be removed to a surface located at the predetermined depth at which the region is cut on the basis of the first machining path created in the first machining path creation step.

To solve the aforementioned problems, according to the invention, a machining method for removing a part of a material by cutting includes a first cutting step of cutting, from a first direction with respect to the material, a region of the material to be removed; and a second cutting step of cutting, from a second direction with respect to the material, a part located under a surface of the region to which the machining from the first direction is applied, as the region of the material to be removed.

To solve the aforementioned problems, according to the invention, a machining method for removing a part of a material by cutting includes a first cutting step of cutting, from a first direction with respect to the material, a region of the material to be removed at a predetermined depth; and a second cutting step of cutting, from a second direction with respect to the material, the region of the material to be removed to a surface located at the predetermined depth at which the region is cut in the first cutting step.

According to the invention, since it is possible to reduce the amount of a part to be cut without cutting an object that is a part of the material, a time for cutting and wearing of a tool can be reduced, thereby improving the lifetime of the tool.

Brief Description of the Drawings

Fig. 1 is a block diagram illustrating a functional configuration of an automatic creation system for automatically creating a machining path according to an embodiment of the invention.

Fig. 2 is a flowchart of a creation process that is performed by the automatic creation system 100 to create a machining path for cutting.

Fig. 3 is a perspective view showing a part to be machined as an example of a CAD design screen.

Fig. 4 is a perspective view of a material to be machined in order to form the part Sample illustrated in Fig. 3.

Fig. 5A is a perspective view of an outer shape of an object CutBox1 to be cut from the material mBox illustrated in Fig. 4 in order to form a cut region Box1 of the part Sample illustrated in Fig. 3.

Fig. 5B is a perspective view of an outer shape of an object CutHole1 to be cut from the material mBox illustrated in Fig. 4 in order to form a cylindrical hole Hole1 of the part Sample illustrated in Fig. 3.

Fig. 6A is a front view of a manufacturing condition setting screen for setting tool information.

Fig. 6B is a table showing results of reading the tool information set on the manufacturing condition setting screen illustrated in Fig. 6A.

Fig. 7 is a cross-sectional view showing a part as an example of interference between a tool and the part.

Fig. 8 is a flowchart of a process of creating machining paths for cutting.

Fig. 9 is a flowchart of a detailed process of creating a path in Z axis direction.

Fig. 10A is a perspective view of the object CutBox1 and illustrates machining paths calculated for the object CutBox1 on the basis of the machining path creation process illustrated in Fig. 9.

Fig. 10B is a perspective view of the material and illustrates results of machining the material along the machining paths illustrated in Fig. 10A.

Fig. 11 is a flowchart of a detailed process of creating paths in Y axis direction.

Fig. 12A is a perspective view of the object CutBox1 to be cut and illustrates the machining paths that are created in the process illustrated in Fig. 11 in order to cut the object CutBox1.

Fig. 12B is a perspective view of the material and illustrates results of machining the material along the machining paths illustrated in Fig. 12A.

Fig. 13 is a diagram illustrating results of calculating machining paths for cutting in a table.

Fig. 14A is a perspective view of the object CutBox1 to be cut and illustrates machining paths for the object CutBox1 with bridges left between a part to be cut and the material.

Fig. 14B is a perspective view of the material and illustrates a result of machining the material along the machining paths illustrated in Fig. 14A.

Fig. 15A is a side view of the part Sample describing a method for calculating an interference region of CutHole1 illustrated in Fig. 5B.

Fig. 15B is a perspective view of CutHole1 and illustrates machining paths used to cut CutHole1 illustrated in Fig. 5B.

Fig. 15C is a front view of CutHole1 and illustrates machining paths used to cut CutHole1 illustrated in Fig. 15A.

Fig. 16A is a perspective view of a part and illustrates an example of a CAD design diagram indicating an object that is to be cut and has a curved surface.

Fig. 16B is a cross-sectional view of the part illustrated in Fig. 16A and illustrates an example of creation of machining paths for the part illustrated in Fig. 16A.

Fig. 16C is a cross-sectional view of the part illustrated in Fig. 16A and illustrates an example of the creation of the machining paths for the part illustrated in Fig. 16A.

Description of the Preferred Embodiments

Hereinafter, an embodiment of the present invention is described in detail with reference to the accompanying drawings.

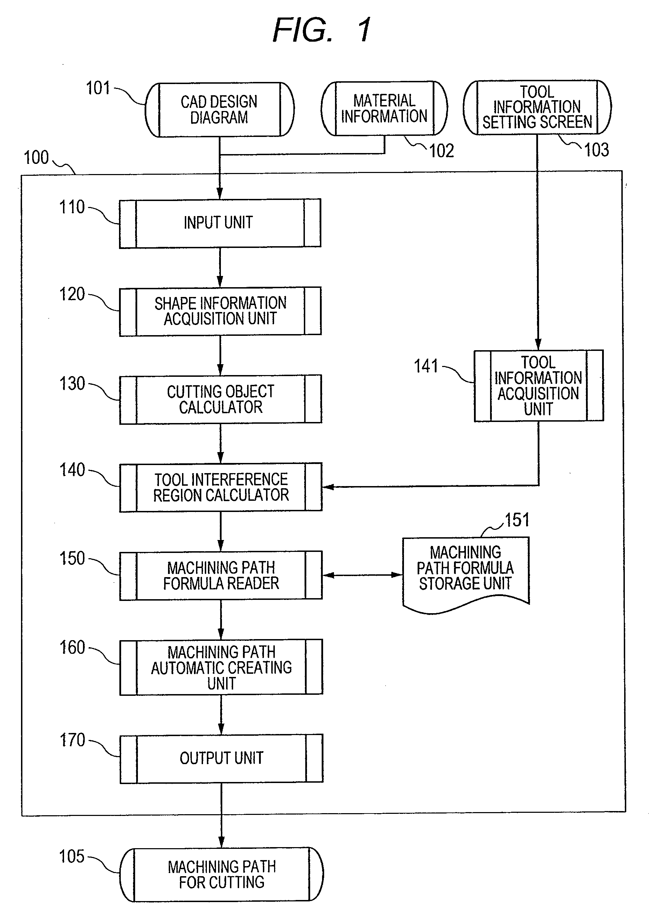

Fig. 1 is a diagram illustrating a functional configuration of an automatic creation system 100 according to the invention, and the automatic creation system 100 automatically creates a machining path for cutting.

The automatic creation system 100 includes an input unit 110, a shape information acquisition unit 120, a cutting object calculator 130, a tool interference region calculator 140, a tool information acquisition unit 141, a machining path formula reader 150, a machining path automatic creating unit 160, and an output unit 170. The input unit 110 receives a CAD design diagram 101 including shape information about a part and a material and material information 102 including the shape information about the material. The shape information acquisition unit 120 acquires the part shape information and the material shape information from the CAD design diagram 101 and the material information 102. The cutting object calculator 130 calculates shape information about an object to be cut from the part shape information and the material shape information which are acquired by the part shape information acquisition unit 120. The tool information acquisition unit 141 reads a tool information setting screen 103 and tool information set on the tool information setting screen 103. The tool interference region calculator 140 calculates an interference region of a tool using the tool information acquired by the tool information acquisition unit 141, the part shape information acquired by the part shape information acquisition unit 120, and the shape information calculated by the cutting object calculator 130 and indicating the shape of the object to be cut. The machining path formula reader 150 reads a formula for a machining path for cutting, while the formula is stored in a machining path formula storage unit 151. The machining path automatic creating unit 160 automatically creates a machining path for cutting and a machining region of the machining path using the object shape information calculated by the cutting object calculator 130 and the tool interference region information calculated by the tool interference region calculator 140 in accordance with the formula read for the machining path for cutting by the machining path formula reader 150. The output unit 170 outputs and prints a result 105 of the created machining path for cutting.

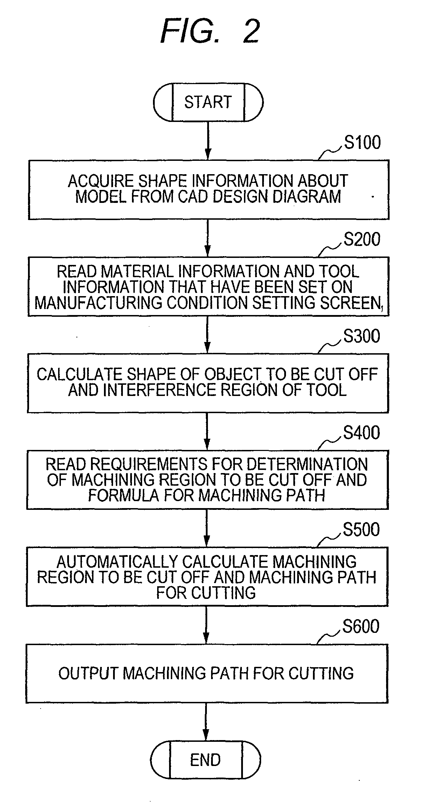

Fig. 2 illustrates the flow of a machining path creation process to be executed by the automatic creation system 100 for creating a machining path for cutting. For the machining path, the shape information about the part model is acquired from the CAD design diagram 101, manufacturing conditions, such as the material information and the tool information that are set on a manufacturing condition setting screen, are read, and the shape of the object to be cut and an interference region of the tool are calculated. After the calculation, a machining region that can be machined for cutting and the machining path for the machining region are calculated. This flow starts when a process of calculating a machining path for cutting is requested by a user through an input device.

Details of the process of automatically calculating a machining path are described with reference to Fig. 2.

First, the part shape information is acquired from the CAD design diagram and the material shape information is acquired from the material information 102 (S100). In general, the CAD design diagram 101 is modeled in a three-dimensional space by providing geometric information about portions of the part and non-geometric information associated with the geometric information from the user. The material information 102 is defined by entering numerical values of a block shape of the material.

Next, the shape information about the object to be cut is calculated from the part shape information acquired in S100 and the material shape information acquired in S100 (S200).

Next, the tool information set on the tool information setting screen 103 is read, and an interference region of the tool is calculated from the read tool information, the shape information of the part Sample acquired in S100, and the object shape information calculated in S200 (S300).

After the shape of the object to be cut and the interference region of the tool are calculated (S300), a formula for the machining path for cutting is read from the machining path formula storage unit 151 (S400), and the machining path automatic creating unit 160 automatically creates the machining path for cutting (S500).

Lastly, the output unit 170 outputs the machining path calculated and created by the machining path automatic creating unit 160 (S600). The machining path is output to a file, a display, a paper, or the like.

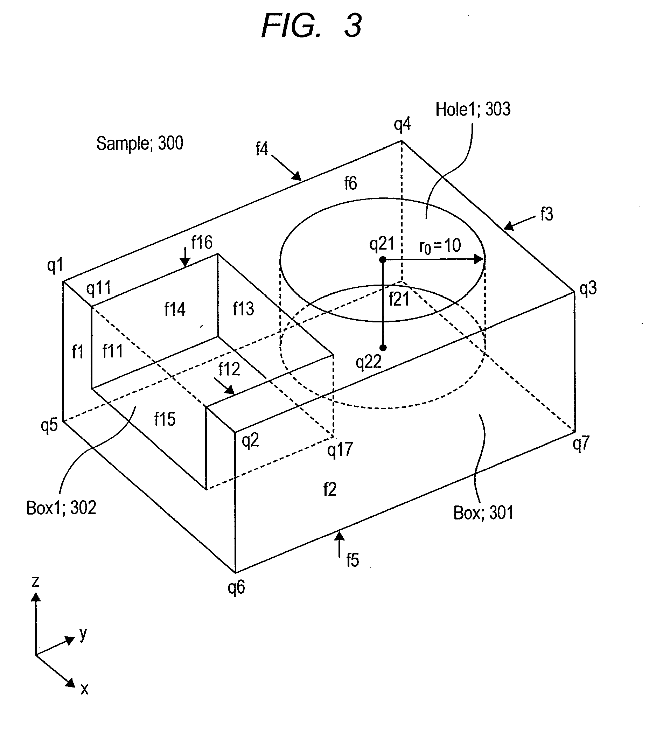

A method for creating a machining path for a cuboid Sample having a cuboid cut region Box1 and a cylindrical hole Hole1 is described below with reference to Figs. 3 to 12.

(1) Acquisition of Shape Information about Model From CAD Design Diagram; S100

Fig. 3 illustrates an example of the CAD design diagram. A part Sample;300 illustrated in Fig. 3 has a shape obtained by removing a portion corresponding to the cuboid Box1;302 and portion corresponding to the cylindrical hole Hole1;303 from a cuboid Box;301. The part Sample;300 is configured by a set operation of the cuboid Box;301, the cuboid Box1;302, and the cylindrical hole Hole1;303. The CAD design diagram includes information about the basic solids Box;301 and Box1;302 forming the part Sample;300 and the hole Hole1;303 and information about lines, planes, curved lines, and the like that represents the shapes. Expression formulas for the shapes are acquired by the part shape information acquisition unit 120. CAD information acquired from the CAD design diagram 101 of the part Sample;300 illustrated in Fig. 3 is composed of the following information.

(a) There are three horizontal upward-facing surfaces. A symbol f6 indicates a top surface of the cuboid Box;301. A symbol f15 indicates a vertically oriented bottom surface of the cuboid hole Box1;302. A symbol f21 indicates a vertically oriented bottom surface of the cylindrical hole Hole1;303.
(b) The basic solid Box;301 is a space restricted by three pairs of surfaces f1 to f6, while the surfaces f1, f4, and f6 that have a corner q1 and are perpendicular to each other are parallel to the surfaces f3, f2 and f5 that have a corner q7 and are perpendicular to each other.
(c) The basic solid Box;302 is a space restricted by three pairs of surfaces f11 to f16, while the surfaces f11, f14, and f16 that have a corner q11 and are perpendicular to each other are parallel to the surfaces f13, f15, and f12 that have a corner q17 and are perpendicular to each other.
(d) The basic solid Hole1;303 is a cylinder that has a central axis extending between a point q21 $(x_0, y_0, z_{01})$ and a point q22 $(x_0, y_0, z_{02})$ and a radius $r_0$.

$$f(x, y) = r_0^2 - (x - x_0)^2 - (y - y_0)^2 \geq 0$$

$$z_{02} \leq z \leq z_{01}$$

(2) Reading of Material Information and Tool Information; S200

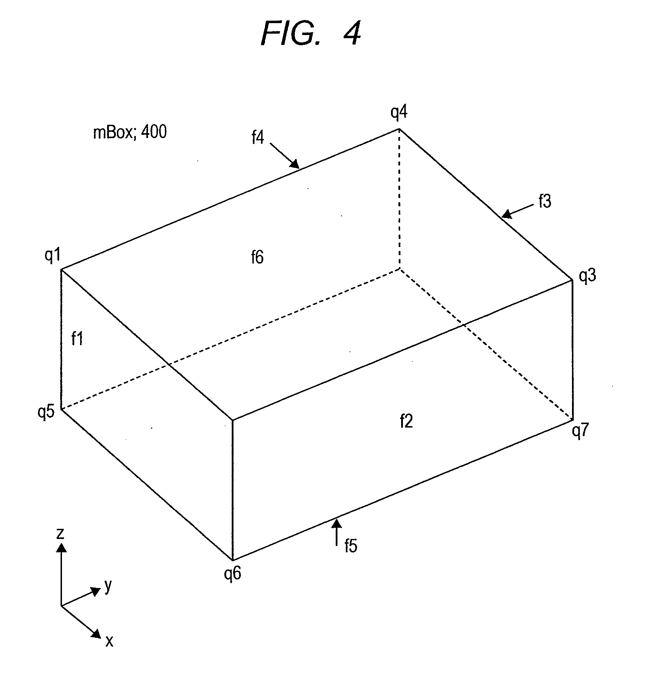

Fig. 4 illustrates an example of a material mBox;400 to be machined to form the part Sample;300 illustrated in Fig. 3.

The material mBox;400 defined in Fig. 4 is composed of the basic cuboid Box;301. The material information includes information about the basic solid Box;301 forming the material to be machined and information about the lines, planes, curved lines, and the like that represent the shapes. The expression formulas for these shapes are acquired by the part shape information acquisition unit 120. The material information that is used to machine the part Sample;300 illustrated in Fig. 4 and acquired from the material information 102 is composed of the following information.

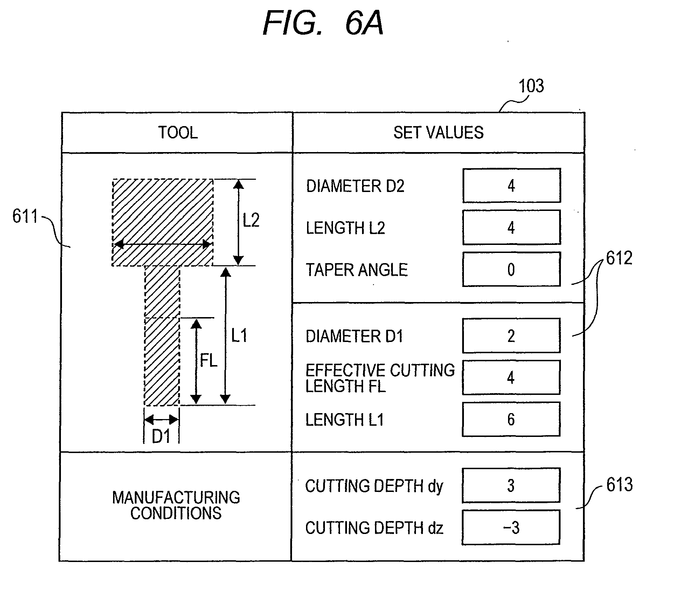

· There is a single horizontal upward-facing surface that is the top surface of the basic solid Box;301.
· The basic solid Box;301 is the space restricted by the three pairs of surfaces f1 to f6, while the surfaces f1, f4, and f6 that have the corner q1 and are perpendicular to each other are parallel to the surfaces f3, f2 and f5 that have the corner q7 and are perpendicular to each other. An example of the tool information setting screen 103 for setting tool information is illustrated in Fig. 6A.

The tool information setting screen 103 illustrated in Fig. 6A includes a tool dimension definition region 611 for defining shapes and dimensions of a tool, a tool dimension setting region 612 for setting dimensions of parts of the tool defined in the tool dimension definition region 611, and a manufacturing condition setting region 613 for setting manufacturing conditions. In the tool information setting region 612, a cutting diameter D1 of the tool, an effective cutting length FL of the tool, the length L1 of the tool, and the like are set, and information such as the diameter D2 of a tool holder for holding the tool, the length L2 of the holder, a taper angle of the holder, and the like are set. In the manufacturing condition setting region613, a cutting depth dy of the tool in Y axis direction and a cutting depth dz of the tool in Z axis direction can be set. The tool information set on the tool information setting screen 103 is acquired by the tool information acquisition unit 141 illustrated in Fig. 1. Fig. 6A shows an example of read out results of the tool information set on the tool information setting screen 103 illustrated in Fig. 6A.

(3) Calculation of Shape of Object to be Cut and Interference Region of Tool; S300

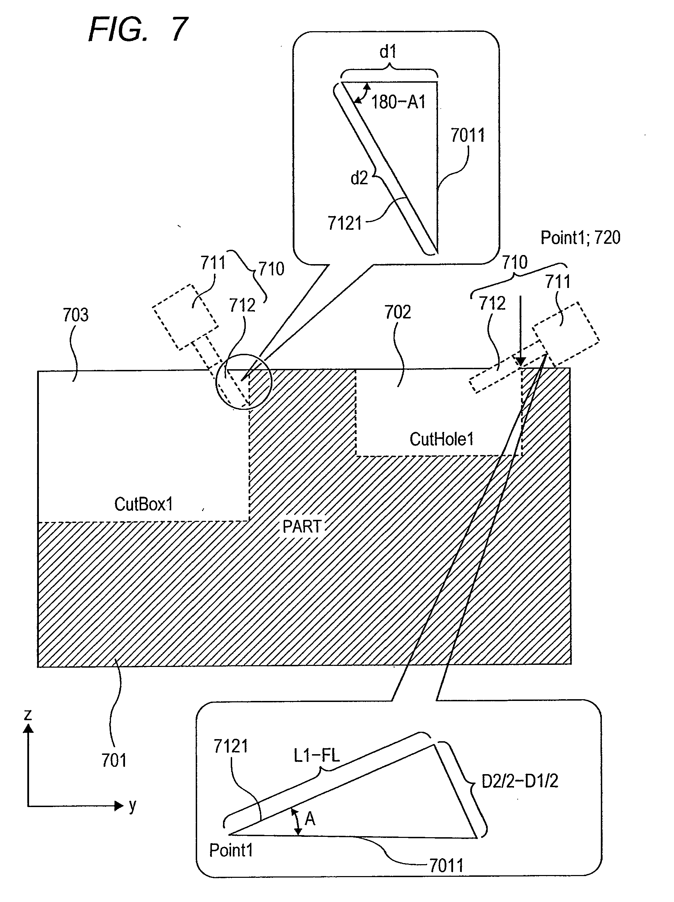

A specific example of a process of calculating the shape of the object to be cut and an interference region of the tool is described with reference to Fig. 7.

Fig. 7 illustrates an example of interference of a tool 710 with a part 701. In general, a holder portion 711 of the tool 710 is larger than a tool portion 712. When the tool 710 is inclined, therefore, the holder portion 711 hits a surface of the part 701 and the tool 710 interferes with the part 701. An inclination angle between a surface 7121 of the tool portion of the tool 710 and a surface 7011 of the part 701 is indicated by a. As indicated by a part of a hole CutHole1; 702, when the angle that is formed when the holder portion 711 of the tool 710 matches (or starts interfering with) the surface 702 of the part 701 is indicated by A, the minimum angle A between the surface 7121 of the tool portion of the tool 710 and the surface 7011 of the part 701 can be calculated according to the following Equation (1) on the basis of the trigonometric function.

$$\tan A = (D2/2 - D1/2)/(L1 - FL) \quad \cdots (Equation\ (1))$$

In addition, if the inclination angle a between the surface 7121 of the tool portion of the tool 710 and the surface 7011 of the part 701 exceeds 90°, an edge of the tool portion 712 of the tool 710 interferes with the part 701 as indicated by a part of a hole CutBox1;703. When a distance between the tool 710 and the part 701 is indicated by d1 and a cutting depth of the tool 710 is indicted by d2, the maximum angle A1 that does not cause the tool 710 to interfere with the part 701 can be calculated according to the following Equation (2) on the basis of the Pythagorean theorem as illustrated in Fig. 7.

$$\cos(180 - A1) = d1/d2 \quad \cdots (Equation\ (2))$$

An interference region at each of points to be machined can be automatically calculated by performing the aforementioned calculations on the points to be machined. For example, the angle A at a point Point1;720 is calculated using the Equation (1) as follows.

$$\texttt{tan A = (D2/2 - D1/2)/(L1 - FL)}$$

$$\texttt{A = tan}^{-1}\texttt{[(D2/2 - D1/2)/(L1 - FL)]} \quad \cdots \texttt{(Equation (3))}$$

Specifically, an interference region in which the tool does not interfere with the part is a region that can be machined by the tool at an angle that satisfies a formula of (A < a < 90°).

An interference region of the tool 300 with the part Sample;300 illustrated in Fig. 3 can be automatically calculated on the basis of the same principle.

(4) Automatic Calculation of Machining Region to be Cut and Machining Path; S400, S500

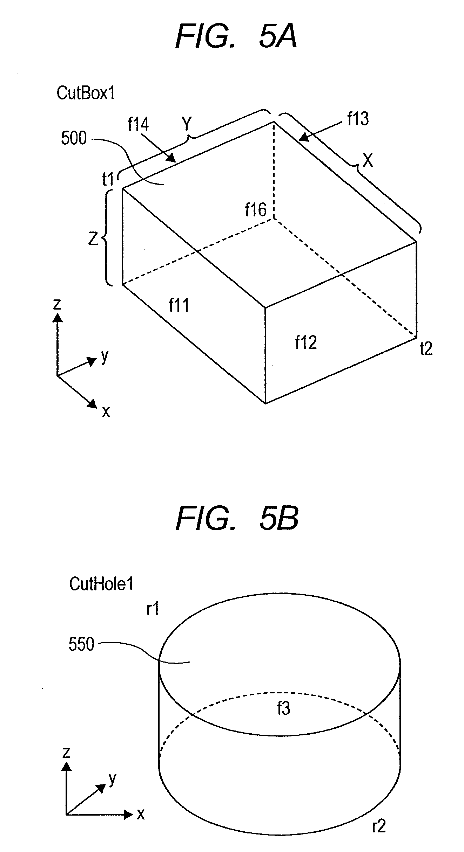

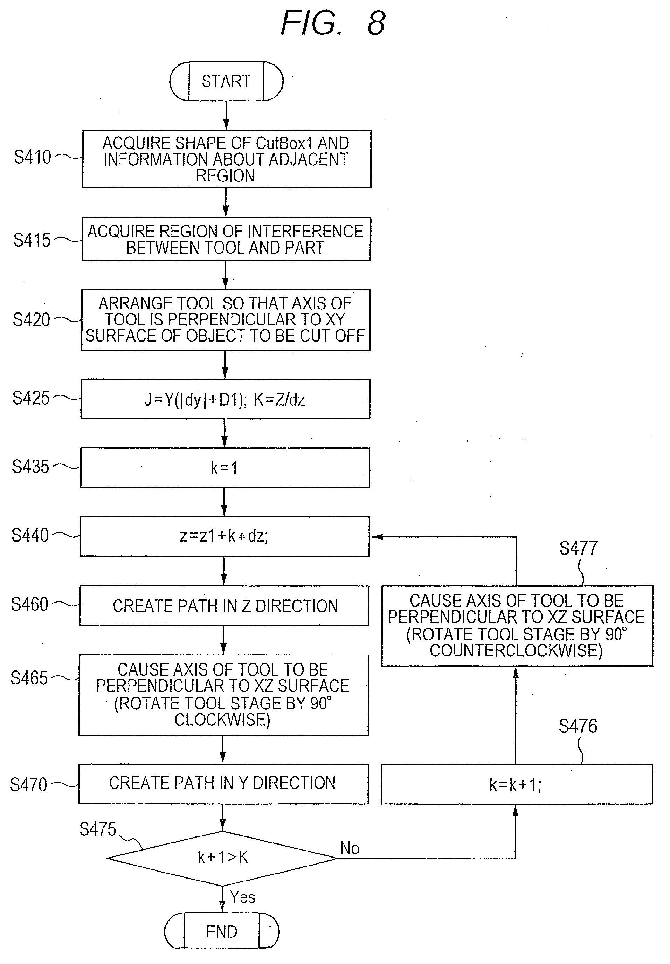

Fig. 8 illustrates an example of the flow of a process of creating machining paths for cutting. The process flow illustrated in Fig. 8 is the flow of the process of creating paths of an edge point Sn (x, y, z) of the tool 710 for a cut box CubBox1;500 that is a cuboid object that is to be cut and has corners t1 (x1, y1, z1) and t2 (x2, y2, z2) opposing each other. A cutting depth of the tool 710 in Y axis direction is indicated by dy, a cutting depth of the tool 710 in Z axis direction is indicated by dz, and it is assumed that z2 > z1. A specific example of the process of automatically calculating machining paths is described using the cut object Cutbox1;500 illustrated in Fig. 5A.

First, in step S410, the shape information that is calculated in the aforementioned S200 and indicates the cut box CutBox1 illustrated in Fig. 5A is acquired.

$$\texttt{Corner t1 = q11}$$

$$\texttt{Corner t2 = q17}$$

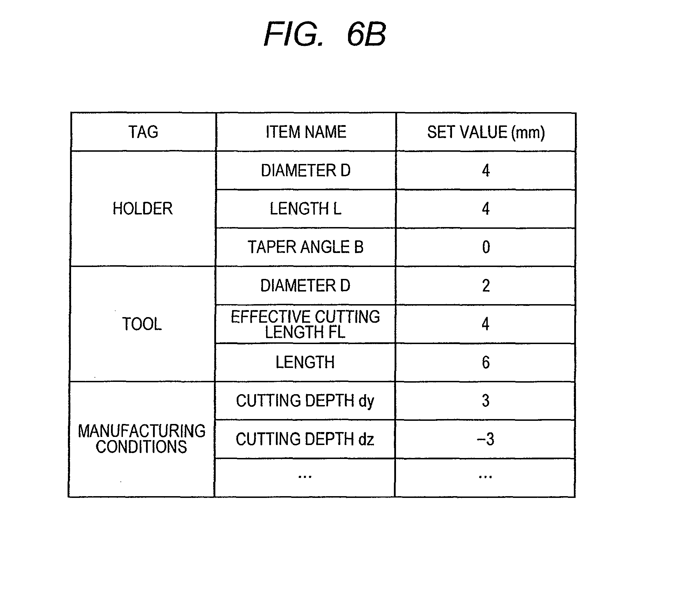

Next, the tool interference information calculated in S300 and the manufacturing conditions are acquired in step S415. An example of the tool information is illustrated in Fig. 6B.

$$\texttt{D1 = the diameter of the tool}$$

$$\texttt{dy = the cutting depth in Y axis direction}$$

$$\texttt{dz = the cutting depth in Z axis direction}$$

Next, in step S420, the tool is arranged so that the axis of the tool is perpendicular to an XY surface of the cut object.

Next, in step S425, the number J of grooves that can be cut and the number K of grooves to be arranged in Z direction are calculated. The number J of grooves that can be cut and the number K of grooves to be arranged in Z direction are calculated using the cutting depth dy in Y axis direction and the cutting depth dz in Z axis direction, while the cutting depths dy and dz are included in the manufacturing conditions acquired in S300. In step S435, an initial value of a counting variable k for the number of grooves to be arranged in Z direction is set to 1.

$$J = Y/(|dy| + D1) = |y2 - y1|/(|dy| + D1)$$

$$K = Z/|dz| = |z2 - z1|/|dz| \qquad \cdots \text{(Equations (4))}$$

In step S435, the initial value of the counting variable k for the number of grooves to be arranged in Z direction is set to 1 (k = 1).

In step S440, a value z (= z1 + k * dz) of the z axis of the tool edge point that serves as the start point of cutting is calculated.

$$z = z1 + k * dz = z1 + dz \qquad \cdots \text{(Equation (5))}$$

In step S460, a machining path on a Z plane calculated in step S440 is created. A detailed procedure of creating the machining path is described in (4-1).

After the machining path in Z direction is created in step S460, a tool stage is rotated 90 degrees clockwise so as to cause an XZ surface to be perpendicular to the tool in step S465.

Next, in step S470, a machining path in Y direction is created so as to be perpendicular to the machining path created on the Z plane in Z direction. A detailed process procedure of creating the machining path in Y direction is described in (4-2).

Next, in step S475, the number of grooves to be arranged in Z axis direction is confirmed. If a groove for which a machining path is not yet created exists, the variable k is incremented by 1 (k = k + 1), steps from S440 to S470 are repeated on a surface corresponding to a formula of (z = z1 + k * dz), and a machining path is created on the surface corresponding to the formula of (z = z1 + k * dz).

(4-1) Creation of Machining Path in Z direction

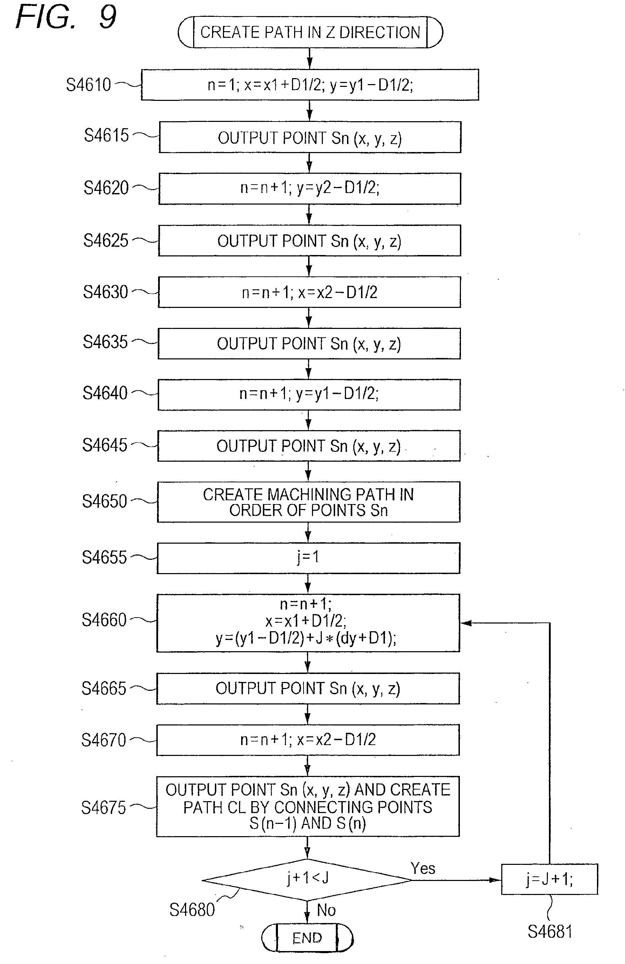

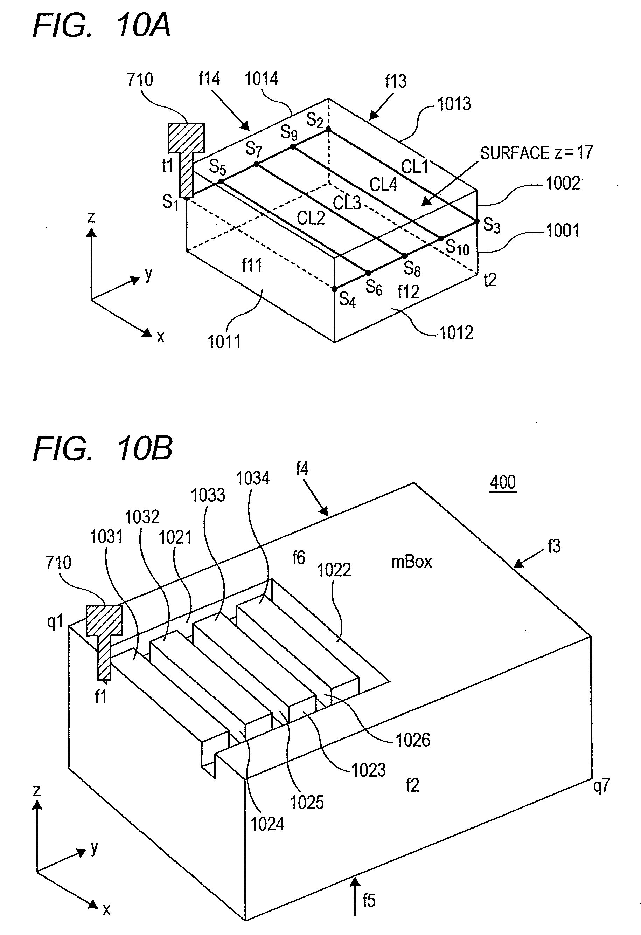

Next, the flow (Fig. 9) of the process of creating the machining path on the Z plane in S460 is described with reference to Fig. 10A.

In steps from S4610 to S4645, a sequence of outer machining points $S_1$ (x1+D1/2, y1-D1/2, $z_1$), $S_2$ (x1+D1/2, y2-D1/2, $z_1$), $S_3$ (x2-D1/2, y2-D1/2, $z_1$), and $S_4$ (x2-D1/2, y1-D1/2, $z_1$) that serve as a boundary between an object 1002 to be cut and a part 1001 is generated.

First, x and y values of the point $S_1$ (x, y, z) are calculated in step S4610, and the point $S_1$ is output in step S4615. Next, a y value of the point $S_2$ (x, y, z) is calculated in step S4620, and the point $S_2$ is output in step S4625. Next, an x value of the point $S_3$ (x, y, z) is calculated in step S4630, and the point $S_3$ is output in step S4635. Next, a y value of the point $S_4$ (x, y, z) is calculated in step S4640, and the point $S_4$ is output in step S4645. Furthermore, in step S4650, a machining path CL1 is created by connecting the generated points $S_1$, $S_2$, $S_3$, and $S_4$ to each other in order.

Next, in steps S4655, S4660, S4665, S4670, and S4675, a machining path that is used to machine a groove that is parallel to the X axis is created at a position distant by the cutting depth dy of the tool 710 in Y axis direction from a surface f11; 1011 of the object 1002 to be cut.

Specifically, in step S4655, an initial value of a counting variable j for the number of grooves in Y direction is set to 1. Next, x and y values of a point $S_5$ (x, y, z) are calculated in step S4660, and the point $S_5$ is output in step S4665.

$$j = 1;$$

$$n = \text{(the number of created machining points } S_n) + 1;$$

$$x = x1 + D1/2$$

$$y = (y1 - D1/2) + j * (dy + D1)$$

$$z = z_1 \qquad\qquad\qquad\qquad \cdots \text{(Equations 6)}$$

Next, x and y values of a point $S_6$ (x, y, z) are calculated in step S4670, and the point $S_6$ is output in step S4675.

Then, a machining path CL2 is created by connecting the points $S_5$ and $S_6$ to each other.

```
n = (the number of created machining points Sn) + 1;
```

```
x = x2 - D1/2
```

The aforementioned steps S4660, S4665, S4670, and S4675 are repeated until machining points exceed a surface f13; 1013 opposite to the surface f11; 1011 of the object 1002 to be cut. Specifically, in step S4680, a value of (j + 1) is compared with a value J. If the value of (j + 1) is smaller than the value J, the value j is incremented by 1 (j = j + 1) in step S4681, and steps S4660, S4665, S4670, and S4675 are repeated until the value of (j + 1) is equal to or larger than the value J, and a machining path CL3 composed of points $S_7$ and $S_8$ and a machining path CL4 composed of points $S_9$ and $S_{10}$ are created.

Fig. 10B illustrates results of machining the material mBox;400 illustrated in Fig. 4 in accordance with the machining paths CL1, CL2, CL3, and CL4 illustrated in Fig. 10A. In Fig. 10B, grooves 1021, 1022, and 1023 are grooves formed by moving the tool 710 along the machining path CL1 and machining the material mBox;400. Grooves 1024 to 1026 are grooves formed by moving the tool 710 along the machining paths CL2, CL3, and CL4 and machining the material mBox;400. As a result of the machining, blocks 1031 to 1034 left in a region surrounded by the grooves 1021, 1022, and 1023.

(4-2) Creation of Machining Path in Y direction

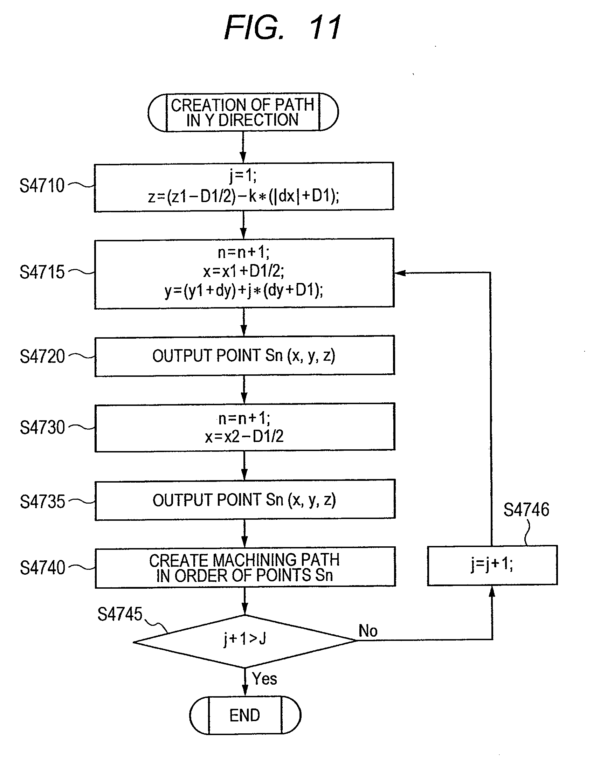

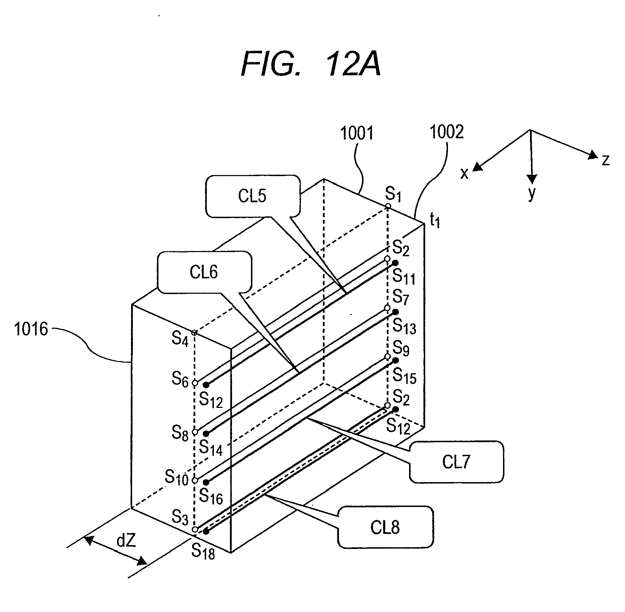

The flow (Fig. 11) of the process of creating a machining path in Y direction is described with reference to Fig. 12A.
In steps S4710, S4715, S4720, and S4735, a machining path is created which is used to machine a groove that is parallel to the X axis and distant by the cutting depth dz of the tool in Z axis direction from a surface f16; 1016 of the object to be cut.
In step S4710, a counting variable j for the number of grooves in Y direction is set to 0, and a z value of a machining point $S_{11}$ (x, y, z) is calculated. The x and y values of the machining point $S_{11}$ (x, y, z) are calculated using Equations (7) in step S4715, and the point $S_{11}$ is output in step S4720.

```
j = 0;

z = (z1 - D1/2) - k * (|dz| + D1)

n = (the number of created machining points Sn) + 1;

x = x1 + D1/2

y = (y1 + dy) + j * (dy + D1)    ··· (Equations (7))
```

Next, an x value of a machining point $S_{12}$ (x, y, z) is calculated using Equations (8) in step S4730, and the point $S_{12}$ is output in step S4735.

```
n = (the number of created machining points Sn) + 1;

x = x2 - D1/2                    ··· (Equations (8))
```

Next, in step S4740, a machining path CL5 is created by connecting the output points $S_{11}$ and $S_{12}$ to each other.
Next, in step S4745, the number of grooves to be arranged in Y axis direction is confirmed. If a groove for which a machining path is not created exists, the process proceeds to step S4746 so as to increment the value j by 1 (j = j + 1), and steps from S4715 to S4740 are repeated to generate a sequence of points for a machining path on a plane.

Steps from S4715 to S4740 are repeated until a formula of (j + 1 > J) is established, and whereby a machining path CL6 composed of points $S_{13}$ and $S_{14}$, a machining path CL7 composed of points $S_{15}$ and $S_{16}$, and a machining path CL8 composed of points $S_{17}$ and $S_{18}$ are created.

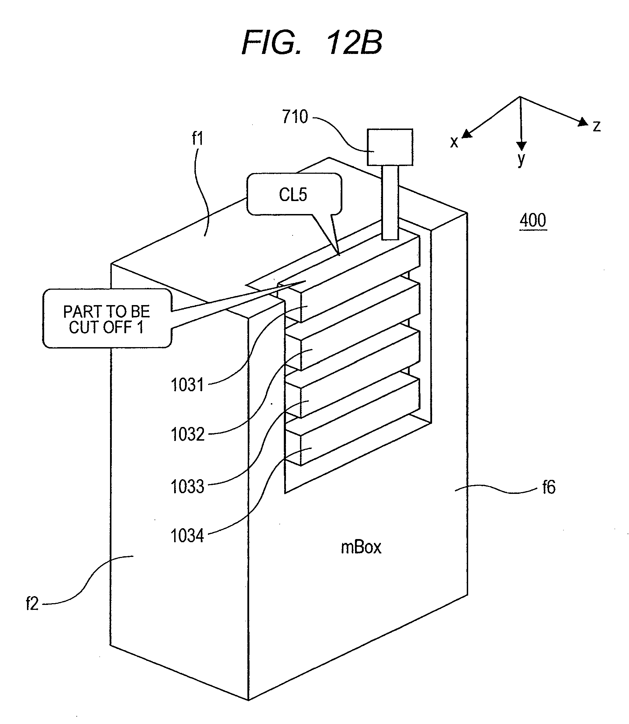

Fig. 12B illustrates an example in which the material Box;400 illustrated in Fig. 4 is machined from the side of a surface f1 that faces upward so that the machining path CL5 (illustrated in Fig. 12A) created on the basis of the flow illustrated in Fig. 11 is machined.

In the actual machining, the tool 710 is moved along the machining path CL5 from the point S11 to the point S12 in X direction while the position of the tool 710 in Z direction is fixed to a position defined by Equations (7). In this case, since the position of the tool 710 in Z direction is the fixed position defined by Equations (7), the tool 710 machines a root portion of the block 1031. Thus, a portion of the block 1031, which is located on the side of a surface f6, is not machined and left. When the tool 710 is moved to the point S12 along the machining path CL5, the remaining portion that is included in the block 1031 and located on the side of the surface f6 is cut.

Next, the tool 710 is moved over a distance of (dy + D1) to the point S14 in Y direction on the basis of Equations (7) and moved from the point S14 to the point S13 along the machining path CL6 and machines the block 1032. A remaining portion that is included in the block 1032 and located on the side of the surface f6 and has yet to be machined is cut by completing the movement of the tool 710 to the point S13 along the machining path CL6.

Next, the tool 710 that reaches the point S13 is moved over the distance of (dy + D1) to the point S15 in Y direction on the basis of Equations (7) and moved from the point S15 to the point S16 along the machining path CL7 and machines the block 1033. A remaining portion that is included in the block 1033 and located on the side of the surface f6 and has not yet been machined (unmachined) is cut by completing the movement of the tool 710 to the point S16 along the machining path CL7.

Furthermore, the tool 710 that reaches the point S16 is moved over the distance of (dy + D1) to the point S18 in Y direction on the basis of Equations (7) and moved from the point S18 to the point S17 along the machining path CL8 and machines the block 1034. A remaining portion that is included in the block 1034 and located on the side of the surface f6 and has not yet been machined (unmachined) is cut by completing the movement of the tool 710 to the point S17 along the machining path CL8.

A portion of the cuboid box1;302 of the part Sample;300 illustrated in Fig. 3 is completely cut by performing the series of operations.

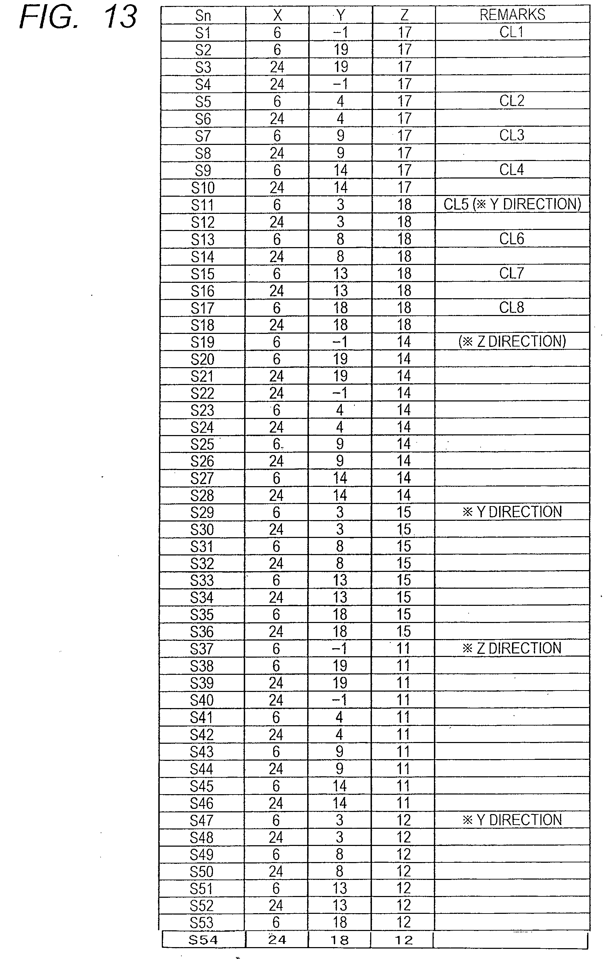

Fig. 13 illustrates an example of results of the calculation processes illustrated in Figs. 8, 9, and 11.

Lastly, the output unit 170 outputs the machining path calculated and created by the machining path automatic creating unit 160 (S600). Specifically, the machining path created in S600 is output to a file, a display, a paper, or the like.

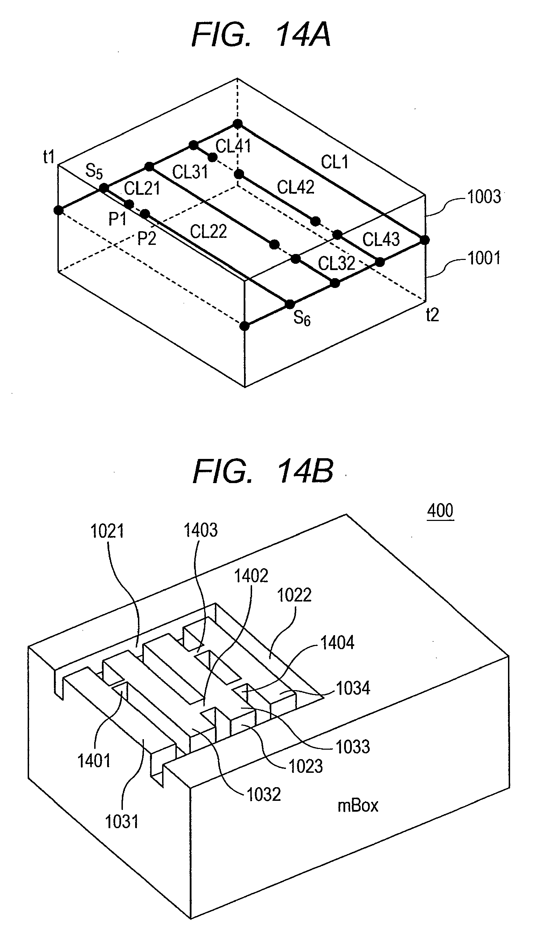

When a machining path to be cut is created, a bridge can be left between a part to be cut and a material, and a direction in which the part is cut can be controlled. The machining path for which the bridge is left is divided by step points, and the machining path is corrected using coordinate values of the step points of the bridge. Fig. 14A illustrates an example of a method for leaving the bridge in the created machining paths CL2, CL3, and CL4 (illustrated in Figs. 10A and 10B) on an object 1003 (to be cut) between the part to be cut and the material. An example is described in which a bridge having a width L is located at a position XP in the created machining path CL2 (illustrated in Fig. 10A) connecting the point S5 to the point S6.

First, a relationship between step points of the bridge and the edge of the tool is defined as follows, and the diameter of the tool and decomposition points P1 and P2 of new machining paths are calculated using the target machining path CL2.

$$\text{x1} = \text{(the set position XP of the bridge)} - \text{(the diameter D1/2 of the tool)}$$

$$\text{x2} = \text{(the set position XP of the bridge)} + \text{(the width L of the bridge)} - \text{(the diameter D1/2 of the tool)}$$

Next, a new machining path CL21 is created by connecting the start point $S_5$ of the machining path CL2 to the point P1, and a new machining path CL22 is created by connecting the point P2 to the end point $S_6$ of the machining path CL2.

In the same manner, machining paths CL31, CL32, CL41, CL42, and CL43 are created in the machining paths CL3 and CL4.

Fig. 14B illustrates a diagram illustrating results of machining performed in accordance with the machining paths illustrated in Fig. 14A. The blocks 1031 to 1034 are formed, like the results described with reference to Fig. 10B. The blocks 1031 and 1032 are connected to each other by a bridge 1401. The blocks 1032 and 1033 are connected to each other by a bridge 1402. The blocks 1033 and 1034 are connected to each other by bridges 1403 and 1404.

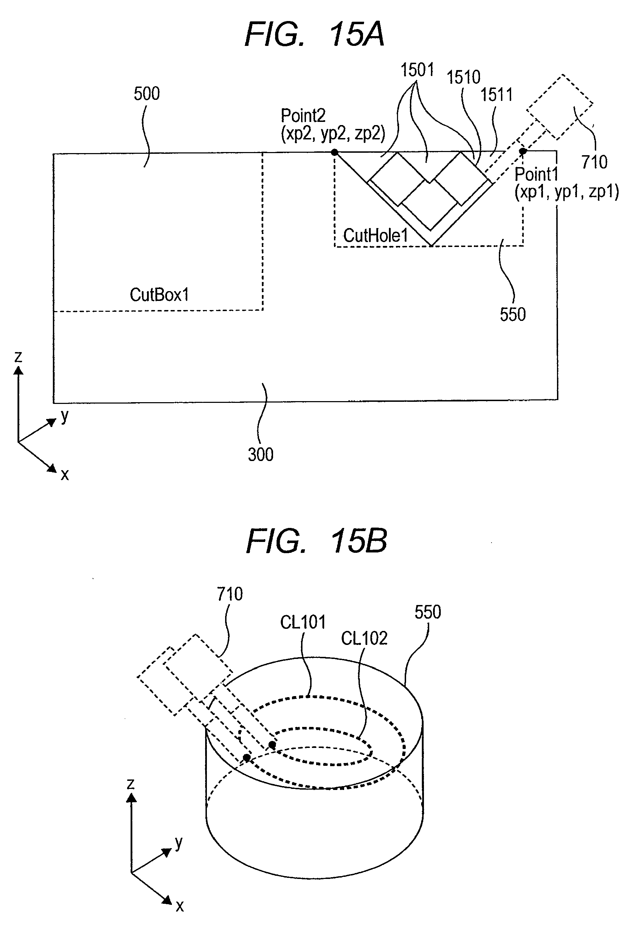

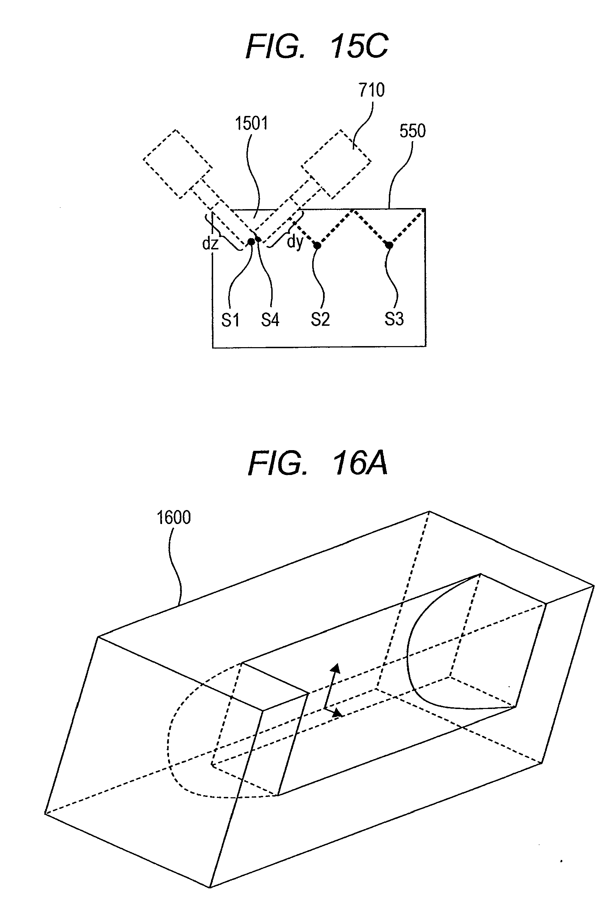

Fig. 15A illustrates an example of creation of a machining path used to cut the object CutHole;550 (illustrated in Fig. 5B) from the part Sample;300 (illustrated in Fig. 3).

Regarding the example (illustrated in Fig. 7) of the interference between the tool 710 and the part 701, a region in which the tool 710 does not interfere with the part Sample;300 between a point Point1 (xp1, yp1, zp1) and a point Point2 (xp2, yp2, zp2) is a region that satisfies the formula of (the angle A (described with reference to Fig. 7) < a < 90°) and in which the tool 710 can machine the part Sample;300. A machining path 1510 is created by referencing the interference conditions and adjusting orientations of the tool 710 and material 300 so as to maximize the volume of an object part 1501 to be cut. If the interference angle A < 45°, the orientation of the material 300 or tool 710 is adjusted and an angle B between the tool 710 and a surface 1511 to be machined is adjusted to 45°. If the interference angle A > 45°, the orientation of the material or tool is adjusted and the angle B between the tool and the surface to be machined is adjusted to an angle of (180° - A).

Next, an edge point S1 (x, y, z) of the tool is calculated from coordinate values of the point Point2 (xp2, yp2, zp2) by the same method as the process flow illustrated in Fig. 8, and a machining path that extends along the contour of the object CutHole1;550 to be cut is created. In this case,

the cutting depth dz1 in Z axis direction = (the cutting depth dz of the tool) * sinB, and

the cutting depth dy1 in Y axis direction = (the cutting depth dy of the tool) * conB.

The x, y, and z values of the edge point S1 (x, y, z) of the tool are calculated according to the following Equations (9).

$$x = xp2;$$

$$y = yp2 + dz * cosB; \text{ and}$$

$$z = zp2 - dz * sinB \qquad \cdots \text{ (Equations (9))}$$

Machining paths are created and arranged at intervals of ((dz + dy)*cosB) in Y axis direction.

A formula for the shape of the object CutHole;550 is the following Equations (10).

$$f(x, y):r_0{}^2 - (x - x_0)^2 - (y - y_0)^2 \geq 0$$

$$z_{02} \leq z \leq z_{01} \qquad \cdots \text{ (Equations (10))}$$

An expression formula for a contour curved surface passing the point Point2 is the following Equations (11).

$$f(x, y):r_0{}^2 - (xp2 - x_0)^2 - (yp2 - y_0)^2 = 0$$

$$z_{02} \leq z \leq z_{01} \qquad \cdots \text{ (Equations (11))}$$

A machining path CL101 of which the start point is the point S1 is expressed by the following Equations (12).

$$f(x, y):r_0{}^2 - (xp2 - x_0)^2 - (yp2 + dz * cosB - y_0)^2 = 0$$

$$z = zp2 - dz * sinB \qquad \cdots \text{ (Equations (12))}$$

Similarly, a machining path CL102 of the points S2 and S3 is created on a plane of (z = zp2 - dz * sinB), and a machining path is created on the next plane of (z = zp2 - 2 * (dz * sinB)).

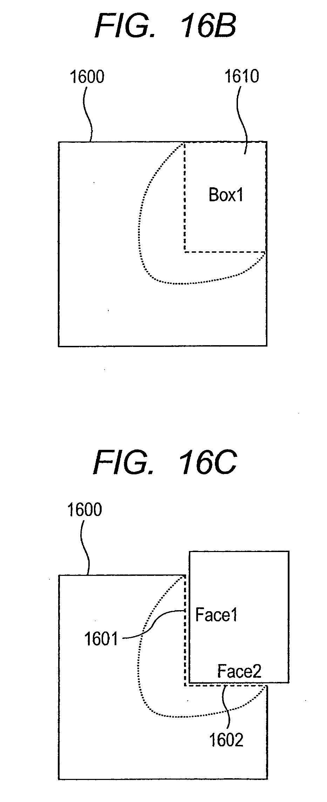

Fig. 16A illustrates an example of a part that includes an object that is to be cut and has a curved surface.

As illustrated in Fig. 16A, when a surface of an object 1600 to be cut is a curved surface, a machining path used to cut a part 1610 is created by the method (described with reference to Figs. 8 to 12B) for creating the machining path used to cut the object CutBox1;500. Next, machining paths that are used to cut an object using the method for creating the machining path used to cut the object CutHolel;550 are created for surfaces Face1;1601 and Face2;1602 illustrated in Fig. 16C.

Although the embodiment of the invention is described above in detail, the invention is not limited to the embodiment and may be variously modified without departing from the spirit of the invention.

Description of Reference Numerals

101 ... CAD design diagram of the part, 102 ... Material information, 103 ... Tool information setting screen, 110 ... Data input unit, 120 ... Shape information acquisition unit, 130 ... Cutting object calculator, 140 ... Tool interference region calculator, 141 ... Tool information acquisition unit, 150 ... Machining path formula reader, 151 ... Machining path formula storage unit, 160 ... Machining path automatic creating unit, 170 ... Output unit, 105 ... Result of machining path for cutting, 100 ... Automatic creation system for automatically creating a machining path for cutting

**Claims**

1.  A machining path creation method for creating machining paths used to remove a part of a material by cutting, comprising:

    a first machining path creation step of using design information to create a first machining path used to cut, from a first direction with respect to the material, a region of the material to be removed; and
    a second machining path creation step of using the design information to create a second machining path used to cut, from a second direction with respect to the material, a part located under a surface of the region to which the machining from the first direction is applied, as the region of the material to be removed.

2.  A machining path creation method for creating machining paths used to remove a part of a material by cutting, comprising:

    a first machining path creation step of using design information to create a first machining path used to cut, from a first direction with respect to the material, a region of the material to be removed at a predetermined depth; and
    a second machining path creation step of using the design information to create a second machining path used to cut, from a second direction with respect to the material, the region of the material to be removed to a surface located at the predetermined depth at which the region is cut on the basis of the first machining path created in the first machining path creation step.

3.  The machining path creation method according to claim 1 or 2,
    wherein the first machining path creation step includes
    an outer circumference removing path formation step of forming a machining path used to remove an outer circumference of the region to be removed from the material, and
    a division path formation step of forming a division path used to divide, into a plurality of parts, an unmachined region located on the inner side of the machining path formed in the outer circumference removing path formation step.

4.  The machining path creation method according to claim 3,
    wherein in the division path formation step, the division path used to divide the unmachined region located on the inner side of the machining path formed in the outer circumference removing path formation step into the plurality of parts is formed so that a connection part that connects the plurality of parts of the unmachined region to each other is left.

5.  A machining method for removing a part of a material by cutting, comprising:

    a first cutting step of cutting, from a first direction with respect to the material, a region of the material to be removed; and
a second cutting step of cutting, from a second direction with respect to the material, a part located under a surface of the region to which the machining from the first direction is applied, as the region of the material to be removed.

6.  A machining method for removing a part of a material by cutting, comprising:

a first cutting step of cutting, from a first direction with respect to the material, a region of the material to be removed at a predetermined depth; and
a second cutting step of cutting, from a second direction with respect to the material, the region of the material to be removed to a surface located at the predetermined depth at which the region is cut in the first cutting step.

7.  The machining method according to claim 5 or 6,
wherein the first cutting step includes
an outer circumference cutting step of removing an outer circumference of the region of the material to be removed, and
a dividing step of cutting an unmachined region located on the inner side of the region cut in the outer circumference cutting step and dividing the unmachined region into a plurality of parts.

8.  The machining method according to claim 7,
wherein in the dividing step of dividing the unmachined region located on the inner side of the region cut in the outer circumference cutting step into the plurality of parts, the unmachined region is cut so that a connection part that connects the plurality of parts of the unmachined region to each other is left.

# FIG. 1

101 — CAD DESIGN DIAGRAM

MATERIAL INFORMATION —102

TOOL INFORMATION SETTING SCREEN —103

100

110 — INPUT UNIT

120 — SHAPE INFORMATION ACQUISITION UNIT

130 — CUTTING OBJECT CALCULATOR

141 — TOOL INFORMATION ACQUISITION UNIT

140 — TOOL INTERFERENCE REGION CALCULATOR

151 — MACHINING PATH FORMULA STORAGE UNIT

150 — MACHINING PATH FORMULA READER

160 — MACHINING PATH AUTOMATIC CREATING UNIT

170 — OUTPUT UNIT

105 — MACHINING PATH FOR CUTTING

14

# FIG. 2

START

**S100**

ACQUIRE SHAPE INFORMATION ABOUT MODEL FROM CAD DESIGN DIAGRAM

**S200**

READ MATERIAL INFORMATION AND TOOL INFORMATION THAT HAVE BEEN SET ON MANUFACTURING CONDITION SETTING SCREEN

**S300**

CALCULATE SHAPE OF OBJECT TO BE CUT OFF AND INTERFERENCE REGION OF TOOL

**S400**

READ REQUIREMENTS FOR DETERMINATION OF MACHINING REGION TO BE CUT OFF AND FORMULA FOR MACHINING PATH

**S500**

AUTOMATICALLY CALCULATE MACHINING REGION TO BE CUT OFF AND MACHINING PATH FOR CUTTING

**S600**

OUTPUT MACHINING PATH FOR CUTTING

END

# FIG. 3

# FIG. 4

mBox; 400

q4, f4, f3, q1, f6, q3, f1, q5, f2, q7, z, y, q6, f5, x

# FIG. 5A

CutBox1

f14　Y

500

f13

t1

X

f16

Z

f11

z

f12

t2

y

x

# FIG. 5B

CutHole1

r1

550

f3

z

y

x

r2

# FIG. 6A

103

| TOOL | SET VALUES | |
|---|---|---|
| 611 | DIAMETER D2 | 4 |
| | LENGTH L2 | 4 |
| | TAPER ANGLE | 0 |
| | DIAMETER D1 | 2 |
| | EFFECTIVE CUTTING LENGTH FL | 4 |
| | LENGTH L1 | 6 |
| MANUFACTURING CONDITIONS | CUTTING DEPTH dy | 3 |
| | CUTTING DEPTH dz | −3 |

612

613

## FIG. 6B

| TAG | ITEM NAME | SET VALUE (mm) |
|---|---|---|
| HOLDER | DIAMETER D | 4 |
| | LENGTH L | 4 |
| | TAPER ANGLE B | 0 |
| TOOL | DIAMETER D | 2 |
| | EFFECTIVE CUTTING LENGTH FL | 4 |
| | LENGTH | 6 |
| MANUFACTURING CONDITIONS | CUTTING DEPTH dy | 3 |
| | CUTTING DEPTH dz | −3 |
| | ... | ... |

## FIG. 7

## FIG. 8

```
                    ┌──────────┐
                    │  START   │
                    └────┬─────┘
                         ▼
S410 ┌─────────────────────────────────────┐
     │ ACQUIRE SHAPE OF CutBox1 AND         │
     │ INFORMATION ABOUT ADJACENT           │
     │ REGION                               │
     └─────────────────┬───────────────────┘
                       ▼
S415 ┌─────────────────────────────────────┐
     │ ACQUIRE REGION OF INTERFERENCE       │
     │ BETWEEN TOOL AND PART                │
     └─────────────────┬───────────────────┘
                       ▼
S420 ┌─────────────────────────────────────┐
     │ ARRANGE TOOL SO THAT AXIS OF         │
     │ TOOL IS PERPENDICULAR TO XY          │
     │ SURFACE OF OBJECT TO BE CUT OFF      │
     └─────────────────┬───────────────────┘
                       ▼
S425 ┌─────────────────────────────────────┐
     │      J=Y(|dy|+D1); K=Z/dz            │
     └─────────────────┬───────────────────┘
                       ▼
S435 ┌─────────────────────────────────────┐
     │               k=1                    │
     └─────────────────┬───────────────────┘
                       ▼
S440 ┌─────────────────────────────────────┐
     │          z=z1+k*dz;                  │◄─────────┐
     └─────────────────┬───────────────────┘          │
                       ▼                               │ S477
S460 ┌─────────────────────────────────────┐  ┌───────────────────────────────────┐
     │      CREATE PATH IN Z DIRECTION      │  │ CAUSE AXIS OF TOOL TO BE           │
     └─────────────────┬───────────────────┘  │ PERPENDICULAR TO XZ SURFACE        │
                       ▼                        │ (ROTATE TOOL STAGE BY 90°          │
S465 ┌─────────────────────────────────────┐  │ COUNTERCLOCKWISE)                  │
     │ CAUSE AXIS OF TOOL TO BE             │  └───────────────────────────────────┘
     │ PERPENDICULAR TO XZ SURFACE          │                  ▲
     │ (ROTATE TOOL STAGE BY 90°            │                  │ S476
     │ CLOCKWISE)                           │  ┌───────────────────────────────────┐
     └─────────────────┬───────────────────┘  │           k=k+1;                   │
                       ▼                        └───────────────────────────────────┘
S470 ┌─────────────────────────────────────┐                  ▲
     │      CREATE PATH IN Y DIRECTION      │                  │
     └─────────────────┬───────────────────┘                  │ No
   S475               ◇                                        │
              ◇──────────────◇───────────────────────────────┘
              │   k+1>K      │
              ◇──────────────◇
                    │ Yes
                    ▼
              ┌──────────┐
              │   END    │
              └──────────┘
```

# FIG. 9

( CREATE PATH IN Z DIRECTION )

S4610 — $n=1; x=x1+D1/2; y=y1-D1/2;$

S4615 — OUTPUT POINT Sn (x, y, z)

S4620 — $n=n+1; y=y2-D1/2;$

S4625 — OUTPUT POINT Sn (x, y, z)

S4630 — $n=n+1; x=x2-D1/2$

S4635 — OUTPUT POINT Sn (x, y, z)

S4640 — $n=n+1; y=y1-D1/2;$

S4645 — OUTPUT POINT Sn (x, y, z)

S4650 — CREATE MACHINING PATH IN ORDER OF POINTS Sn

S4655 — $j=1$

S4660 — $n=n+1;$ $x=x1+D1/2;$ $y=(y1-D1/2)+J*(dy+D1);$

S4665 — OUTPUT POINT Sn (x, y, z)

S4670 — $n=n+1; x=x2-D1/2$

S4675 — OUTPUT POINT Sn (x, y, z) AND CREATE PATH CL BY CONNECTING POINTS S(n−1) AND S(n)

S4680 — $j+1<J$    Yes → $j=J+1;$   S4681

No

( END )

## FIG. 10A

## FIG. 10B

# FIG. 11

```
        ┌─────────────────────────┐
        │  CREATION OF PATH       │
        │  IN Y DIRECTION         │
        └─────────────────────────┘
                    │
                    ▼
S4710  ┌─────────────────────────────────────┐
       │  j=1;                               │
       │  z=(z1−D1/2)−k∗(|dx|+D1);           │
       └─────────────────────────────────────┘
                    │
                    ▼
S4715  ┌─────────────────────────────────────┐
       │  n=n+1;                             │◄──────────┐
       │  x=x1+D1/2;                         │           │
       │  y=(y1+dy)+j∗(dy+D1);               │           │
       └─────────────────────────────────────┘           │
                    │                                     │
                    ▼                                     │
S4720  ┌─────────────────────────────────────┐           │
       │  OUTPUT POINT Sn (x, y, z)          │           │
       └─────────────────────────────────────┘           │
                    │                                     │
                    ▼                                     │
S4730  ┌─────────────────────────────────────┐           │
       │  n=n+1;                             │           │
       │  x=x2−D1/2                          │           │
       └─────────────────────────────────────┘           │
                    │                                     │
                    ▼                                     │
S4735  ┌─────────────────────────────────────┐           │
       │  OUTPUT POINT Sn (x, y, z)          │           │
       └─────────────────────────────────────┘           │
                    │                            S4746    │
                    ▼                          ┌──────────┴──┐
S4740  ┌─────────────────────────────────────┐│  j=j+1;     │
       │  CREATE MACHINING PATH              │└─────────────┘
       │  IN ORDER OF POINTS Sn              │       ▲
       └─────────────────────────────────────┘       │
 S4745              │                                 │
         ┌──────────▼──────────┐      No              │
         ◄      j+1>J          ─────────────────────►─┘
         └──────────┬──────────┘
                    │ Yes
                    ▼
              ┌───────────┐
              │   END     │
              └───────────┘
```

$j=1;$

$z=(z1-D1/2)-k*(|dx|+D1);$

$n=n+1;$
$x=x1+D1/2;$
$y=(y1+dy)+j*(dy+D1);$

OUTPUT POINT Sn (x, y, z)

$n=n+1;$
$x=x2-D1/2$

OUTPUT POINT Sn (x, y, z)

CREATE MACHINING PATH IN ORDER OF POINTS Sn

$j+1>J$

$j=j+1;$

# FIG. 12A

# FIG. 12B

## FIG. 13

| Sn | X | Y | Z | REMARKS |
|---|---|---|---|---|
| S1 | 6 | −1 | 17 | CL1 |
| S2 | 6 | 19 | 17 | |
| S3 | 24 | 19 | 17 | |
| S4 | 24 | −1 | 17 | |
| S5 | 6 | 4 | 17 | CL2 |
| S6 | 24 | 4 | 17 | |
| S7 | 6 | 9 | 17 | CL3 |
| S8 | 24 | 9 | 17 | |
| S9 | 6 | 14 | 17 | CL4 |
| S10 | 24 | 14 | 17 | |
| S11 | 6 | 3 | 18 | CL5 (※ Y DIRECTION) |
| S12 | 24 | 3 | 18 | |
| S13 | 6 | 8 | 18 | CL6 |
| S14 | 24 | 8 | 18 | |
| S15 | 6 | 13 | 18 | CL7 |
| S16 | 24 | 13 | 18 | |
| S17 | 6 | 18 | 18 | CL8 |
| S18 | 24 | 18 | 18 | |
| S19 | 6 | −1 | 14 | (※ Z DIRECTION) |
| S20 | 6 | 19 | 14 | |
| S21 | 24 | 19 | 14 | |
| S22 | 24 | −1 | 14 | |
| S23 | 6 | 4 | 14 | |
| S24 | 24 | 4 | 14 | |
| S25 | 6 | 9 | 14 | |
| S26 | 24 | 9 | 14 | |
| S27 | 6 | 14 | 14 | |
| S28 | 24 | 14 | 14 | |
| S29 | 6 | 3 | 15 | ※ Y DIRECTION |
| S30 | 24 | 3 | 15 | |
| S31 | 6 | 8 | 15 | |
| S32 | 24 | 8 | 15 | |
| S33 | 6 | 13 | 15 | |
| S34 | 24 | 13 | 15 | |
| S35 | 6 | 18 | 15 | |
| S36 | 24 | 18 | 15 | |
| S37 | 6 | −1 | 11 | ※ Z DIRECTION |
| S38 | 6 | 19 | 11 | |
| S39 | 24 | 19 | 11 | |
| S40 | 24 | −1 | 11 | |
| S41 | 6 | 4 | 11 | |
| S42 | 24 | 4 | 11 | |
| S43 | 6 | 9 | 11 | |
| S44 | 24 | 9 | 11 | |
| S45 | 6 | 14 | 11 | |
| S46 | 24 | 14 | 11 | |
| S47 | 6 | 3 | 12 | ※ Y DIRECTION |
| S48 | 24 | 3 | 12 | |
| S49 | 6 | 8 | 12 | |
| S50 | 24 | 8 | 12 | |
| S51 | 6 | 13 | 12 | |
| S52 | 24 | 13 | 12 | |
| S53 | 6 | 18 | 12 | |
| S54 | 24 | 18 | 12 | |

## FIG. 14A

## FIG. 14B

## FIG. 15A

500

Point2
(xp2, yp2, zp2)

1501  1510  1511

710

Point1
(xp1, yp1, zp1)

CutHole1

550

CutBox1

z

y

x

300

## FIG. 15B

710

CL101  CL102  550

z

y

x

## FIG. 15C

## FIG. 16A

## FIG. 16B

1600          1610

Box1

## FIG. 16C

1600

Face1

1601

Face2

1602

## INTERNATIONAL SEARCH REPORT

| | International application No. |
|---|---|
| | PCT/JP2011/077594 |

| A. CLASSIFICATION OF SUBJECT MATTER |
|---|
| *G05B19/4097*(2006.01)i, *B23C3/28*(2006.01)i, *B23Q15/00*(2006.01)i |

According to International Patent Classification (IPC) or to both national classification and IPC

| B. FIELDS SEARCHED |
|---|

Minimum documentation searched (classification system followed by classification symbols)
G05B19/4097, B23C3/28, B23Q15/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2002-346801 A (NK Kogyo Kabushiki Kaisha),<br>04 December 2002 (04.12.2002),<br>(Family: none) | 5-7<br>1-3<br>4,8 |
| Y<br>A | JP 2010-170323 A (INCS Inc.),<br>05 August 2010 (05.08.2010),<br>(Family: none) | 1-3<br>4,8 |
| A | JP 2002-268718 A (Toshiba Corp.),<br>20 September 2002 (20.09.2002),<br>(Family: none) | 1-8 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 February, 2012 (24.02.12) | 06 March, 2012 (06.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3545070 B

- JP 3870021 B